# EUROPÄISCHE PATENTSCHRIFT

(11) **EP 0 608 276 B1**
(45) Veröffentlichungstag und Bekanntmachung des Hinweises auf die Patenterteilung: **28.06.1995**
(21) Anmeldenummer: 92920590.4
(22) Anmeldetag: 30.09.1992
(51) Int. Cl.: B60T 8/36, F16K 1/54, F16K 31/06, F16K 47/02

(54) **ELEKTROMAGNETVENTIL MIT GERÄUSCHREDUZIERUNG, INSBESONDERE FÜR HYDRAULISCHE BREMSANLAGEN MIT SCHLUPFREGELUNG**
NOISE-REDUCED ELECTROMAGNETIC VALVE, IN PARTICULAR FOR HYDRAULIC BRAKING SYSTEMS WITH DRIVE SLIP CONTROL
VANNE ELECTROMAGNETIQUE A BRUIT REDUIT, NOTAMMENT POUR SYSTEME HYDRAULIQUES DE FREINAGE A SYSTEME D'ANTIPATINAGE A L'ACCELERATION

(30) Priorität: 25.10.1991 DE 4135232
(43) Veröffentlichungstag der Anmeldung: 03.08.1994
(73) Patentinhaber: ITT Automotive Europe GmbH, 60488 Frankfurt am Main (DE)
(72) Erfinder: BECK, Erhard, D-6290 Weilburg (DE)
(74) Vertreter: Portwich, Peter
(86) Internationale Anmeldenummer: EP9202257
(87) Internationale Veröffentlichungsnummer: WO9308051

(56) Entgegenhaltungen:
- EP-A- 0 181 643
- EP-A- 0 457 244
- WO-A-91/04181
- WO-A-92/04214
- US-A- 3 907 379

## Beschreibung

Die Erfindung betrifft ein Elektromagnetventil nach dem Oberbegriff des Anspruchs 1.

Derartige konventionelle, hinreichend bekannte Ventile zur Durchflußsteuerung von Fluiden bei schlupfgeregelten hydraulischen Bremsanlagen finden vielfältige praktische Verwendung.

Aus der DE 37 01 019 A1 ist bereits ein Elektromagnetventil für eine schlupfgeregelte, hydraulische Bremsanlage bekannt, bestehend aus einem Ventilstößel aufnehmenden Ventilsitz, wobei der Ventilstößel über einen Elektromagneten erregbar und in einem Ventilgehäuse axial beweglich geführt ist sowie mit einem zwischen dem Ventilstößel und dem Ventilsitz steuerbar angeordneten, ringförmigen Strömungsquerschnitt, der mit den das Ventilgehäuse durchdringenden Druckmittelkanälen in Verbindung steht. Zur Steuerung sämtlicher Bremskreise sind auf vorteilhafte Weise mehrere Ventile in einem Ventilblockgehäuse zusammengefaßt, so daß auf rationelle, kostengünstige Weise eine platzsparende Positionierung jedes Elektromagnetventils gegeben ist.

Weniger vorteilhaft anzusehen ist bei der bekannten Ventilausführung dessen Geräuschverhalten während den Ventilschaltphasen, das auf das instationäre Strömungsverhalten und damit auf die diskontinuierliche Umströmung des Ventilschließgliedes infolge der binären Ventilschaltstellungen zurückzuführen ist.

Um die Geräuschentwicklung und damit die Übertragung von Körperschall zu mindern, werden zur Zeit erhebliche passive wie auch aktive Geräuschdämpfungsmaßnahmen getroffen, die jedoch alle mit erheblichen Kosten und mit optimierungsbedürftigen Ergebnissen verbunden sind.

Es wird hierzu auf das aus der EP-A-0457244 beschriebene Stromregelventil verwiesen, das mittels pneumatischer oder ggf. auch elektrischer Ventilstößelbetätigung einen Druckmittelstrom zwischen einem Einlaß- und einem Auslaßkanal einstellt. Das am Ventilstößel hierzu angebrachte Ventilschließglied weist einen im wesentlichen zylinderförmigen Abschnitt auf, der mit zwei diametral angeordneten Längskerben mit unterschiedlicher Länge in das zum Auslaßkanal gerichtete Auslaßgehäuse des Ventils eintaucht. Die unterschiedlich langen Längskerben regeln hubabhängig den Bereich kleiner Volumenströme, während die zwischen den Längskerben großflächig angeordneten Ausnehmungen den Ventilstrom bei erheblich größerem Druckmittelbedarf regeln sollen.

Eine hydraulische Dämpfungseinrichtung zur Verzögerung der Ventilschließbewegung sowie ein kleines Radialspiel zwischen einer den Ventilstößel führenden Buchse und der Ausnehmung zur Druckmittelverbindung zwischen dem Einlaß- und dem Auslaßkanal sind nicht vorgesehen.

Daher ist es die Aufgabe der Erfindung, ein Elektromagnetventil der eingangs genannten Gattung dahingehend zu verbessern, daß unter Umgehung der vorgenannten Nachteile sowie bei gleichzeitiger Gewährleistung der Funktionssicherheit und Einhaltung eines relativ einfachen Aufbaus eine maßgebliche Reduzierung des Geräuschverhaltens während der Ventilschaltphasen erreicht wird.

Erfindungsgemäß wird die gestellte Aufgabe durch die den Patentanspruch 1 kennzeichnenden Merkmale gelöst, wonach auf der dem Magnetanker entfernt gelegenen Umfangsfläche des Ventilstößels zumindest eine in Längsrichtung partiell erstreckende Ausnehmung mit definierter Länge, Breite und Tiefe angeordnet ist, wobei der mit der Ausnehmung versehene Bereich des Ventilstößels in einer Buchse mit kleinem Radialspiel geführt ist und wobei ein zwischen der Buche und dem Ventilsitz angeordneter Schließdämpferraum in Abhängigkeit von der Hubbewegung des Ventilstößels ein hydraulisches Druckpolster einspannt.

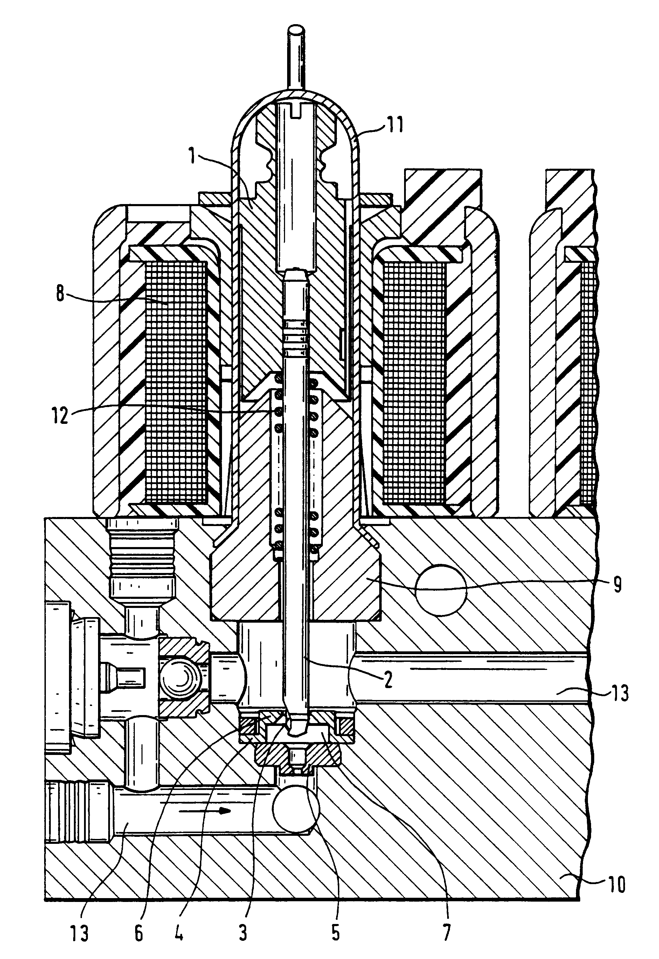

Durch die in den Unteransprüchen aufgezeigten Maßnahmen sind zweckmäßige Ausbildungen der Erfindung angegeben, die im Zusammenhang mit den weiteren Merkmalen und Vorteilen der Erfindung nachfolgend anhand einer Zeichnung (Figur 1) näher dargestellt und erläutert wird.

Die Figur 1 zeigt im Querschnitt ein in der elektromagnetisch nicht erregten Grundstellung geöffnetes Elektromagnetventil, dessen Ventilgehäuse 10 vorzugsweise zur Aufnahme weiterer Elektromagnetventile in Ventilblockbauweise hergestellt ist. Im einzelnen ist in Figur 1 ein mit einer Ventilhülse 11 im Ventilgehäuse 10 verstemmter Magnetkern 9 dargestellt, der im Bereich des Magnetankers 1 eine kegelstumpfförmige Verjüngung aufweist. Angepaßt an die Kontur des Kegelstumpfs weist die dem Magnetkern 9 benachbarte Stirnfläche des Magnetankers 1 eine trichterförmige Einsenkung auf. In der abbildungsgemäßen stromlos offenen Schaltposition des Elektromagnetventils ist der Magnetanker 1 gegenüber dem Magnetkern 9 zur Einhaltung eines definierten Luftspalts mittels einer Druckfeder 12 auf Abstand gehalten. Diese Druckfeder 12 ist vom ankerseitigen Ventilstößel 2 durchdrungen und somit gleichzeitig gegen ein Ausknicken einzelner Federwindungen geschützt. Der dem Magnetanker 1 abgewandte Bereich des Ventilstößels 2 erstreckt sich koaxial hindurch den Magnetkern 9 bis in einen zwischen einer Buchse 4 und einem Ventilsitz 5 gelegenen Schließdämpferraum 7. Unterhalb sowie oberhalb des Schließdämpferraumes 7 gelegen, befinden sich die miteinander zu verbindenden Druckmittelkanäle 13. Die Buchse 4 verfügt über ein scheibentopfförmiges Gehäuse, dessen schneidenförmig verjüngter Zentrierring 6 mit einer am Ventilstößel 2 speziell angebrachten kerbenförmigen Ausnehmung 3 in Überdeckung bringbar ist. Die besondere Gestaltung der Buchse 4 sorgt einerseits für die Einhaltung eines kleintolerierten Radialspiels s des Ventilstößels 2, andererseits übernimmt der abbildungsgemäße asymmetrische Ventilöffnungsquerschnitt in der stromlosen Grundstellung des Elektromagnetventils eine Blendenfunktion, so daß beispielsweise auf die für schlupfgeregelte Bremsanlagen gebräuchlichen separat angeordneten Blendenkörper im Ventilgehäuse verzichtet werden kann.

Anhand den vorangegangen Erläuterungen zum prinzipiellen Aufbau des Erfindungsgegenstandes wird nachfolgend die Funktionsweise beschrieben.

Hierbei soll zunächst von einem binären schaltbaren Elektromagnetventil, das abweichend von der in Figur 1 ersichtlichen Proportionalventilcharakteristik nicht über die trichter- bzw. kegelförmige Gestaltung des Magnetankers und Magnetkerns verfügt, beschrieben werden. Derartige, konventionelle Elektromagnetventile verursachen infolge der binären Schaltstellungen jeweils einen unstetigen Strömungsverlauf, dessen Nachteile durch Anwendung der nachfolgend beschriebenen charakteristischen Merkmale erheblich vermindert werden können. In der strömungsoffenen Grundstellung des Elektromagnetventils gelangt analog zum Proportionalmagnetventil gemäß Figur 1 Druckmittel aufgrund der Ausnehmung 3 über einen relativ kleinen asymmetrischen Ventilöffnungsquerschnitt vom ersten zum zweiten Druckmittelkanal 13. Dieser aus der am Ventilstößel 2 kerbenförmigen Ausnehmung 3 und aus dem messerförmig verjüngten Zentrierring 6 der Buchse 4 gebildete, mit Radialspiel behaftete Ventilöffnungsquerschnitt, übernimmt beim Einsatz in schlupfgeregelten Bremsanlagen eine Blendenfunktion. Damit erübrigt sich im vorgenannten Falle die separate, zugleich kostenintensive Anordnung von Blendenkörpern im Ventilgehäuse 10. Bei Stromerregung der Magnetspule 8 wird der Ventilöffnungsquerschnitt abhängig von der konstruktiven Charakteristik (Länge, Breite, Tiefe) der Ausnehmung 3 kontinuierlich in einem definierten Druckverlaufsmuster verschlossen, so daß das Druckmittel, anstelle einer impulsartigen Abregelung des Strömungsverlaufs, eine Verzögerung mit verminderter Druckamplitude erfährt. Dies führt zugleich beim Eintauchen des Ventilstößels 2 in die Buchse 4 in Abhängigkeit vom Stößelhub und Stößelquerschnitt, zu einer hydraulischen Dämpfung, da beim Verschließen des Ventilöffnungsquerschnittes Druckmittelvolumen im Schließdämpferraum 7 eingespannt wird, das verzögert über den jeweils während der Ventilschließbewegung vorherrschenden reduzierten Ventilöffnungsquerschnitt zum weiteren Druckmittelkanal 13 und damit zum Druckmittelverbraucher, beispielsweise eine Radbremse, gelangt. Hierdurch werden die besonders bei binären Elektromagnetventilen auftretenden Druckimpulse in den Druckmittelkanälen, die jeweils vom Schließ- bzw. Öffnungsimpuls ausgelöst werden, vermieden.

Durch die in Figur 1 gezeigte Ausführung des Magnetankers 1 und Magnetkerns 9 ergibt sich bei entsprechender Anpassung der Steuerund Regelungstechnik eine Proportionalcharakteristik für das Elektromagnetventil, so daß entsprechend der zuvor beschriebenen Funktionsweise des binären Elektromagnetventils als Unterscheidungsmerkmal zwischen den Ventilendstellungen zusätzlich eine kontinuierliche und damit individuelle Regelung des Stößelhubs und des Volumenstromes geschehen kann. Hierzu eignet sich im besonderen eine Stromgeregelte, elektrische Ansteuerung des Proportionalmagneten mit Pulsbreiten moduliertem Stellsignal. Eine weitere Verbesserung bekannter Elektromagnetventile hinsichtlich des Geräuschverhaltens läßt sich durch eine hochfrequente digitale Ansteuerung der Magnetspule realisieren, so daß zusätzlich zur beschriebenen hydraulischen Dämpfung eine elektrische Dämpfung die Ventilschaltgeräusche erheblich reduzieren.

Zusammenfassend wird darauf verwiesen, daß ohne Veränderungen an dem bestehenden Ventilgehäuse 10 vornehmen zu müssen, durch minimale Konstruktionsanpassungen des Ventilstößels 2, des Magnetkerns 9 und des Magnetankers 1 eine erhebliche Reduzierung der Ventilgeräusche, insbesondere bei relativ großen Druckdifferenzen, gewährleistet ist, da durch die vorgeschriebenen Maßnahmen unerwünschte Druckspitzen vermieden werden.

### Bezugszeichenliste:

- 1: Magnetanker
- 2: Ventilstößel
- 3: Ausnehmung
- 4: Buchse
- 5: Ventilsitz
- 6: Zentrierring
- 7: Schließdämpferraum
- 8: Magnetspule
- 9: Magnetkern
- 10: Ventilgehäuse
- 11: Ventildom
- 12: Druckfeder
- 13: Druckmittelkanal

## Patentansprüche

1. Elektromagnetventil, das einen von einem Ventildom (11) umschlossenen Magnetanker (1) aufweist, der in Abhängigkeit einer strombeaufschlagbaren, am Ventildom (11) angebrachten Magnetspule (8) eine Hubbewegung vollzieht, so daß ein am Magnetanker (1) angeformter und von einem Magnetkern (9) teilumschlossener Ventilstößel (2) auf einem in einem Ventilgehäuse (10) befestigten Ventilsitz (5) einwirkt, dadurch **gekennzeichnet**, daß auf der dem Magnetanker (1) entfernt gelegenen Umfangsfläche des Ventilstößels (2) zumindest eine in Längsrichtung partiell erstreckende Ausnehmung (3) definierter Länge, Breite und Tiefe angeordnet ist, wobei der mit der Ausnehmung (3) versehene Bereich des Ventilstößels (2) in einer Buchse (4) mit kleinem Radialspiel geführt ist, und daß zwischen der Buchse (4) und dem Ventilsitz (5) ein Schließdämpferraum (7) angeordnet ist, der in Abhängigkeit von der Hubbewegung des Ventilstößels (2) ein hydraulisches Druckpolster einspannt.

2. Elektromagnetventil nach Anspruch 1, dadurch **gekennzeichnet**, daß in der elektromagnetisch nicht erregten Stellung des Magnetankers (1) die Ausnehmung (3) dem Ventilöffnungsquerschnitt eines Blendenkörpers entspricht.

3. Elektromagnetventil nach Anspruch 1 oder 2, , dadurch **gekennzeichnet**, daß der am Ventilsitz (5) anlegbare Ventilstößel (2) von der Buchse (4) zentriert ist.

4. Elektromagnetventil nach mindestens einem der vorhergehenden Ansprüche 1 bis 3, dadurch **gekennzeichnet**, daß die Buchse (4) topfförmig gestaltet ist und daß die Ausnehmung (3) im Bereich der Stößelzentrierung mit einem schneidenförmig verjüngten, an der Buchse (4) angebrachten Zentrierring (6) in Überdeckung bringbar ist.

5. Elektromagnetventil nach mindestens einem der vorhergehenden Ansprüche, dadurch **gekennzeichnet**, daß das Elektromagnetventil mit einer Proportionalventilcharakteristik versehen ist, wozu der dem Magnetanker (1) zugewandte Stirnflächenbereich des Magnetkerns (9) kegelstumpfförmig verjüngt und der dem Magnetkern (9) zugewandte Stirnflächenbereich des Magnetankers (1) trichterförmig geöffnet ist.

6. Elektromagnetventil nach Anspruch 5, dadurch **gekennzeichnet**, daß die Ansteuerung des Proprotionalmagneten ein pulsbreitenmoduliertes Stellsignal und eine elektrische Stromregelung aufweist.

## Claims

1. A solenoid valve including an armature (1) which is surrounded by a valve dome (11) and performs a stroke motion in dependence on a current-energized magnet coil (8) arranged on the valve dome (11), so that a valve tappet (2) shaped to the armature (1) and partially surrounded by a magnet core (9) acts on a valve seat (5) fastened in a valve housing (10),
**characterized** in that, on the circumferential surface of the valve tappet (2) which is remote from the armature (1), at least one recess (3) of defined length, width and depth is arranged which partially extends in the longitudinal direction, and the area of the valve tappet (2) including the recess (3) is guided in a sleeve (4) with a small radial play, and in that, between the sleeve (4) and the valve seat (5), a closure damping chamber (7) is arranged which compresses a hydraulic pressure cushion in dependence on the stroke movement of the valve tappet (2).

2. A solenoid valve as claimed in claim 1,
**characterized** in that, in the electromagnetically non-excited position of the armature (1), the recess (3) corresponds to the valve opening cross-section of an orifice element.

3. A solenoid valve as claimed in claim 1 or claim 2,
**characterized** in that the valve tappet (2) abuttable on the valve seat (5) is centred by the sleeve (4).

4. A solenoid valve as claimed in at least one of the preceding claims 1 through 3,
**characterized** in that the sleeve (4) has a cup-shaped design, and in that, in the area where the tappet is centred, the recess (3) may be moved to overlap with a knife-type-taper centering ring (6) arranged on the sleeve (4).

5. A solenoid valve as claimed in at least one of the preceding claims,
**characterized** in that the solenoid valve has a proportional valve characteristic, to which end the front face area of the magnet core (9) facing the armature (1) has a truncated-cone-type taper and the front face area of the armature (1) facing the magnet core (9) is opened like a funnel.

6. A solenoid valve as claimed in claim 5,
**characterized** in that the actuation of the proportional magnet has a pulse-width-modulated control signal and electric current control.

## Revendications

1. Valve à commande électromagnétique, qui comprend une armature magnétique mobile (1) qui est entourée par un dôme de valve (11) et qui exécute un mouvement de course sous l'action d'une bobine d'électro-aimant (8) agencée de façon à pouvoir être alimentée en courant et montée sur le dôme de valve (11), d'une façon telle qu'un poussoir de valve (2) rendu solidaire au formage, de l'armature magnétique mobile (1) et entouré en partie par un noyau magnétique (9) coopère avec un siège de valve (5) fixé dans un boîtier de valve (10), caractérisée en ce qu'au moins un évidement (3) de longueur, largeur et profondeurs déterminées, qui s'étend en partie en direction longitudinale, est ménagé sur la surface périphérique du poussoir de valve (2) qui est située à distance de l'armature magnétique mobile (1), en ce que la zone du poussoir de valve (2) qui est pourvue de l'évidement (3) est guidée dans une douille (4) avec une petit jeu radial et en ce qu'entre la douille (4) et le siège de valve (5), il est ménagé une chambre d'amortissement de fermeture (7) qui enferme sous contrainte un coussin de pression hydraulique en fonction du mouvement de course du poussoir de valve (2).

2. Valve à commande électromagnétique selon la revendication 1, caractérisée en ce que, dans la position de l'armature magnétique mobile (1) dans laquelle cette dernière n'est pas soumise à l'action électromagnétique, l'évidement (3) correspond à la section transversale d'ouverture de valve d'un corps d'étranglement.

3. Valve à commande électromagnétique selon la revendication 1 ou 2, caractérisée en ce que le poussoir de valve (2) agencé de façon à pouvoir être appliqué en appui sur le siège de valve (5) est centré par la douille (4).

4. Valve à commande électromagnétique selon au moins l'une des revendications précédentes 1 à 3, caractérisée en ce que la douille (4) est réalisée en forme de cuvette et en ce que, dans la zone du centrage du poussoir, l'évidement (3) est agencé de façon à pouvoir être amené en recouvrement vis-à-vis d'un anneau de centrage (6) à section convergente en forme d'arête et monté sur la douille (4).

5. Valve à commande électromagnétique selon au moins l'une des revendications précédentes, caractérisée en ce que la valve à commande électromagnétique est pourvue d'une caractéristique de valve de type proportionnel et en ce qu'à cet effet, la zone de la surface frontale du noyau magnétique (9) qui est tournée vers l'armature magnétique mobile (1) a une forme convergente en tronc de cône et la zone de surface frontale de l'armature magnétique mobile (1) qui est tournée vers le noyau magnétique (9) est évasée en forme d'entonnoir.

6. Valve à commande électromagnétique selon la revendication 5, caractérisée en ce que l'opération de commande de l'électro-aimant de type proportionnel comporte un signal de réglage à modulation d'impulsions en largeur et une régulation de courant électrique.
